# EUROPEAN PATENT APPLICATION

(11) **EP 1 675 421 A1**
(43) Date of publication of application: **28.06.2006**
(21) Application number: 04030323.2
(22) Date of filing: 21.12.2004
(51) Int. Cl.: H04Q 7/38

(54) **Method and system for barring outgoing calls to voice mail**

(71) Applicant: SIEMENS AKTIENGESELLSCHAFT, 80333 München (DE)
(72) Inventor: Patil, Vikram, 560078 Bangalore (IN)

(57) **Abstract**

The invention describes a switching system and method for handling access to a called party's (B) mailbox in a telecommunication network,
wherein if a calling part's (A) request for a call connection to the called party (B) is detected and a call connection to the called party (B) cannot be established,
it is checked whether a status indicator indicates that a call from this calling party (A) is not to be connected to a mailbox of a called party (B),
wherein only if no status indicator indicates that a call from this calling party (A) is not to be connected to a mailbox of a called party (B), the calling party (A) is connected to a mailbox of the called party (B),
whereas else the calling party (A) is not connected to a mailbox of the called party (B).

## Description

The invention concerns methods and devices for handling access of a calling party to a called party's mailbox in a telecommunication network.

It is an object of the invention to handle access to a called party's mailbox in a cellular telecommunication network in a way suitable for a calling party.
The object is achieved respectively by the independent claims. The method according to the invention allows efficient handling of connections to a called party's mailbox in a cellular telecommunication network according to current preferences of a calling party.

Further details of the invention are described in the claims and in the following explanation of possible embodiments in the drawings:
Fig. 1 shows a calling party A trying to call a called party B that is not available and that has activated forwarding of calls to his (B) mailbox.
Fig. 2 shows a (potential calling) party A activating barring of future call connections from him (A) to a called party's (B) mailbox by a message to his (A) home location register HLR.
Fig. 3 shows a calling party A trying to call a called party B that is not available and that has activated forwarding of calls to his mailbox, wherein a call connection between calling party A and the mailbox of the called party B is blocked due to a earlier message of calling party A requesting this blocking.
Fig. 4 shows a calling party A trying to call a called party B that is in an other telecommunication network then the calling party A.
Fig. 5 shows a call from the calling party A in Fig 4 being blocked.
Fig. 6 shows a calling party A trying to call a roaming called party B that is in an other telecommunication network then the calling party A.
Fig. 7 shows a call from the calling party A in Fig 6 being blocked.

Voice messaging service enables a voice message to be stored for later retrieval by the mobile recipient, either because he was not reachable at the time of the call, or the called party has set forwarding all his calls to his voice mail. Voice Mail is an advanced communications tool that allows persons to exchange information with people when direct conversation is not necessary or possible.

This paper presents a barring technique that helps calling party to bar all calls to any mobile called party's voice mailbox. The solution described in the following sections helps mobile users to set barring of all outgoing calls to any voice mailbox.

With the widespread success of voice mail communication, more and more people wish to forward their incoming calls to voice mailbox when roaming, or when not accessible. Repeated calls to a person's voicemail box cost (as the signal is established) and sometimes are disturbing also. Worst, the costs can be high when the calling party is roaming outside his country.

As voicemail box service is offered at a reasonable price to mobile users and it is cheaper to forward and retrieve messages from voice mailbox especially while roaming. Voice mail service not only enables called parties to receive messages during roaming or when not reachable at the time of call but completely at the expense of calling party.

With the voice mail message service set to grow in the years to come, there can be a growing benefit in barring bar all outgoing calls to a voice mailbox (within a home PLMN or outside HPLMN).

A outgoing calls barring technique according to the invention can be implemented via standard USSD requests.:
The following use case depicts the way this barring works.

### Use Case 1:

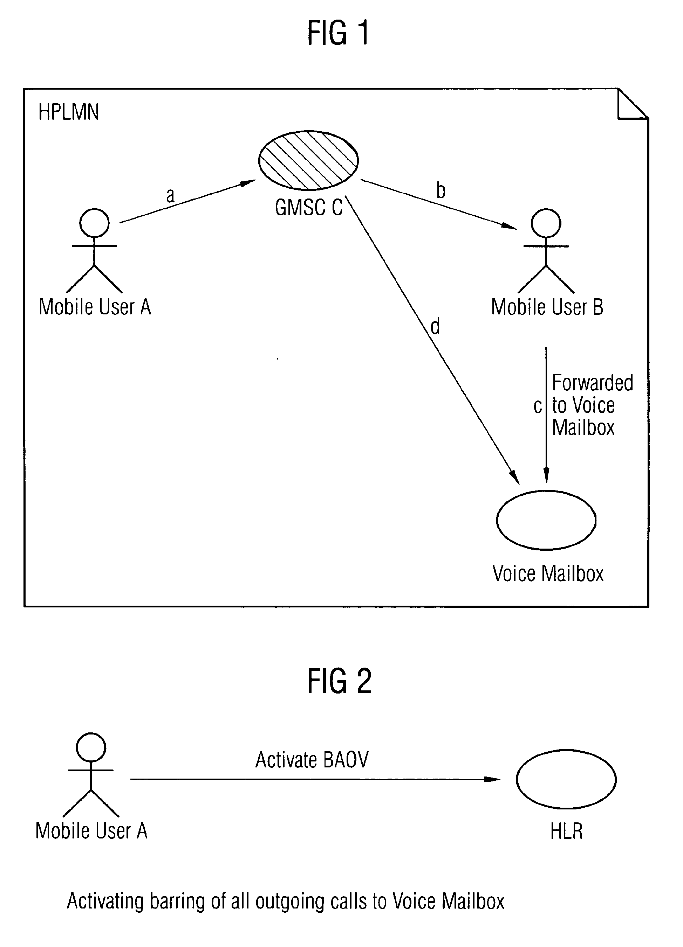

According to Fig. 1, a mobile user A calls mobile user B, who has the call forwarding unconditional active towards his voice mail box. Both the subscribers are in their HPLMN (Home Public Land Mobile Network).

A mobile user A makes a call to a user B. The mobile user B has set call forwarding unconditional to his voice mailbox and thus the call is established to the voice mailbox (as depicted below in Fig. 1).

The calling party pays for the call establishment for the first leg i.e from mobile user A to GMSC ("a") as shown in Fig. 1.

According to Fig. 2, if a user (A) wants to bar his (future) calls to a voicemail box (may be he has already left a message or for some other reason) the user can activate barring of all outgoing calls to any voice mailbox (or alternatively e.g. only to the mailbox of user B). By this the user A can avoid the tariff from mobile user A to voice mailbox of user B. However, the charges with relation to call forwarding (if any) will be borne by mobile user B i.e. called party (i.e. "b", "c", "d" legs as shown in the above diagram). If a user sends a USSD etc message "Activate BAOV" to his home location register HLR indicating he requests to bar call connections from him to a mailbox, a status indicator representing this request is stored in the HLR and as the HLR is checked before establishment of a call originating from caller A call connections from him to a mailbox are barred (until this indicator is deleted by a USSD message etc).

### Activate barring of all outgoing calls to Voice Mailbox

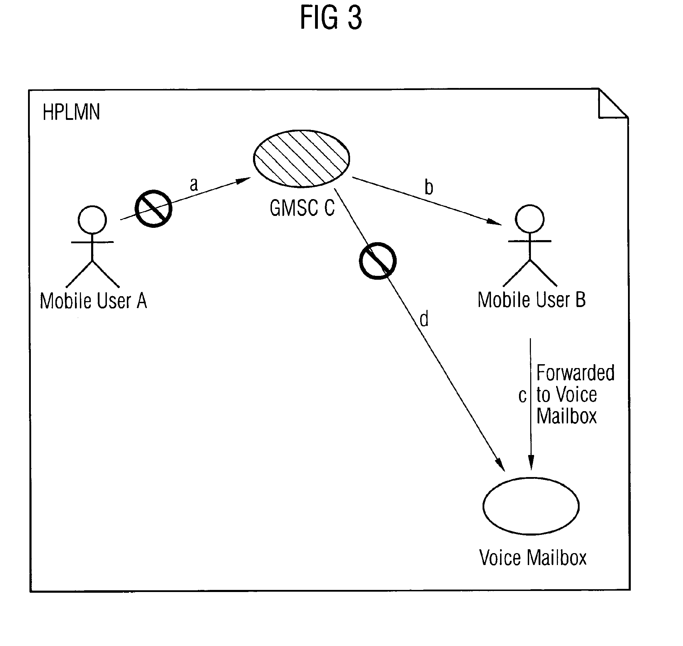

If now (after activating barring of call connections to a mailbox) the mobile user A makes a call to user B then the call does not get established if forwarded to voicemail box. The mobile user A avoids the charge of connecting to the mobile user B's voice mailbox (i.e. the first leg "a") as shown in Fig. 3.

The above barring can be extended to automatic answering machines or other voice messaging services also.

### Use Case 2:

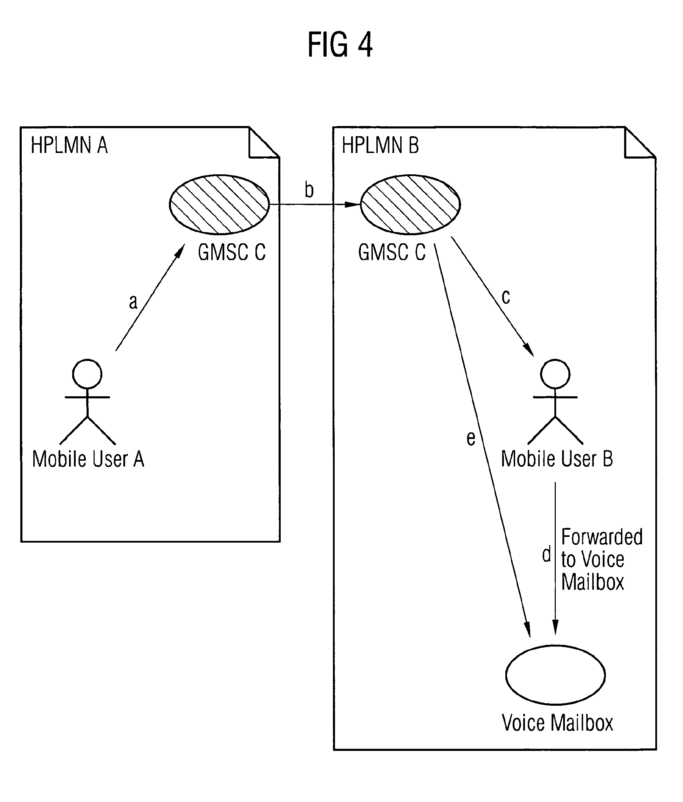

According to Fig. 4, a mobile user A calls mobile user B of another network, who has the call forwarding unconditional active towards his voice mail box. Both the subscribers are in different PLMN.

A mobile user A makes a call to a user B of an other PLMN. The mobile user B has set call forwarding unconditional to his voice mailbox and thus the call is established to the voice mailbox. The mobile user A is charged for the two legs" a" and "b"(i.e. from mobile user A to GMSC A and from GMSC A to GMSC B).

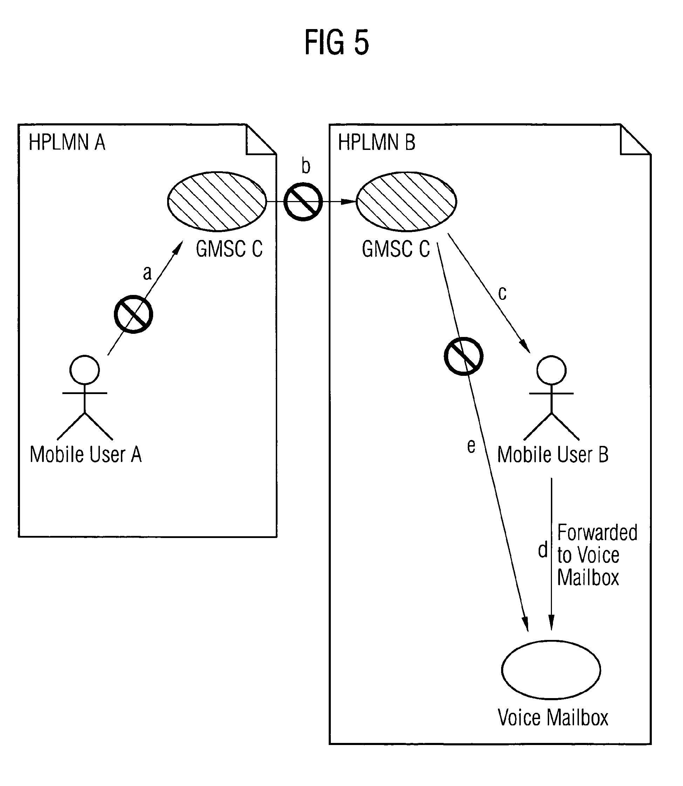

According to Fig. 5, the mobile user A can activate barring of all out going calls to voice mailbox using standard USSD request. Now when user A makes a call to user B then the call does not get established if forwarded to voicemail box.
The calling user can avoid the charge of the two legs "a" and "b" by activating this barring in this scenario.

### Use Case 3 :

A roaming mobile user A calls mobile user B of another network, who has the call forwarding unconditional active towards his voice mail box.

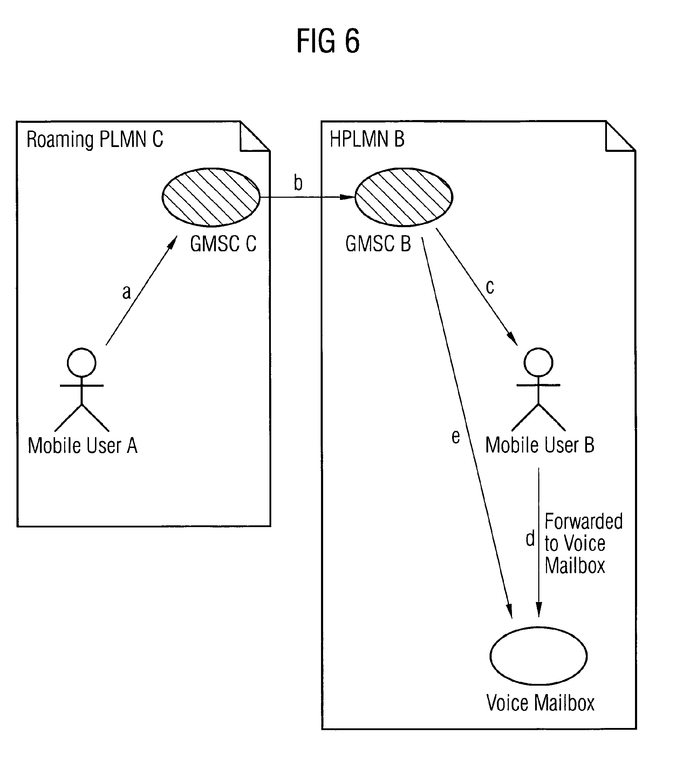

According to Fig. 6, a mobile user A is currently roaming in PLMN C. He makes a call to a user B of other PLMN. The mobile user B has set call forwarding unconditional to his voice mailbox and thus the call is established to the voice mailbox.

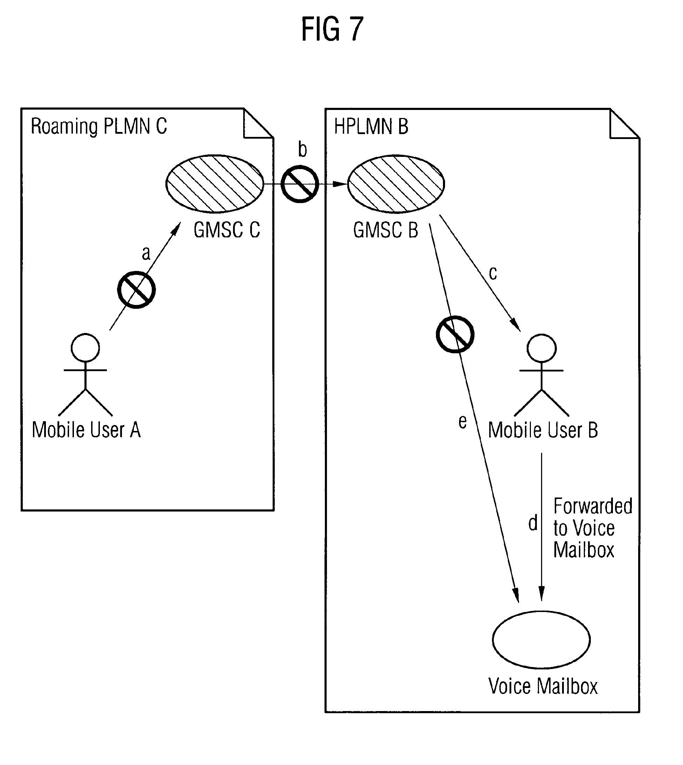

As Fig. 7 shows the mobile user A can activate barring of all out going calls to voice mailbox using a standard USSD request. Now when user A makes a call to user B then the call does not get established if forwarded to the voicemail box of user B.

The calling user can avoid the charge of the two legs "a" and "b" by activating this barring in this scenario also. This charge can be high as the calling party is roaming in this scenario.

If the mobile user B (called party) is also roaming in some other PLMN then the charge on the calling party is still the two legs "a" and "b". (As the called party will bear the last leg of charge as he is roaming.)

### Technical Details:

Whenever a calling party dials a called party's number, the GMSC must route the call to the called party's HLR. The HLR then reads the subscriber record and then checks if call forwarding is set to a voice mailbox. If yes, then this number is routed back to the GMSC for connecting the voice mailbox. If the above service is active then the call to the voice mailbox must be denied and the call should not be established.

The technique of call barring is simple and effective to whoever wishes to bar all his calls to voice mailbox, thereby avoiding making unnecessary calls.

### Advantages:

1. It is beneficial to the calling party user.
2. Operator can charge also based on the number of callings hitting the voice mailbox. The charging may be based on the roaming situation also. In short, calls hitting national voice mailbox can be charged less when compared to the international voice mailbox.

### Additional Use Case / possible embodiment:

The above-described barring technique also holds true for other voice inherited value added services like answering machine and other voice messaging services.

## Claims

1. Method for handling establishing connections to a called party's (B) mailbox in a telecommunication network,
wherein, if a requested call connection between a calling party (A) and a called party (B) cannot be established, it is checked whether a status indicator indicates that a call from this calling party (A) is not to be connected to a mailbox of a called party (B),
wherein only if a status indicator does not indicate that a call from this calling party (A) is not to be connected to a mailbox of a called party (B), the calling party (A) is connected to a mailbox of the called party (B),
whereas else the calling party (A) is not connected to a mailbox of the called party (B).

2. Method according to claim 1, **characterized in that** the status indicator, indicating for a party (A) that a call from this party (A) is not to be connected to a mailbox of a or any called party (B), is set according to a message received from the party (A).

3. Method according to claim 2, **characterized in that** the message is a USSD message_of a party (A) received by a component of a cellular mobile telecommunication network indicating either
- that a call from this party (A) is to be connected to a mailbox of a or of any called party (B)
- or that a call from this party (A) is not to be connected to a mailbox of a or of any called party (B).

4. Method according to any of the preceding claims, **characterized in that** before setup of a call connection to a called party (B) it is checked whether a call connection to the called party (B) can be established.

5. Method according to any of the preceding claims, **characterized in that** if no call connection to the called party (B) can be established it is checked whether calls to this called party (B) are to be connected to a mailbox, especially according to a setting caused by the called party (B).

6. Method according to any of the preceding claims, **characterized in that** the telecommunication network is a mobile telecommunication network, especially a cellular mobile telecommunication network.

7. Method according to any of the preceding claims, **characterized in that** the calling party (A) and the called party (B) are in the same telecommunication network

8. Method according to any of the preceding claims 1-6, **characterized in that** the calling party (A) and the called party (B) are in the other telecommunication networks.

9. Method according to any of the preceding claims, **characterized in that** the calling party and/ or the called party (B) is roaming in an other telecommunication network than its home telecommunication network.

10. Switching system for a cellular mobile telecommunication network for handling a connection to a called party's (B) mailbox in a telecommunication network,
wherein the switching system is designed for checking, if a calling part's (A) request for a connection to the called party (B) is detected and a connection to the called party (B) cannot be established,
whether a status indicator indicates that a call from this calling party (A) is not to be connected to a mailbox of a called party (B),
and for connecting the calling party (A),
only if no status indicator indicates that a call from this calling party (A) is not to be connected to a mailbox of a called party (B),
to a mailbox of the called party (B).

## Amended claims

### Amended claims in accordance with Rule 86(2) EPC.

**1.** Method for handling establishing connections to a called party's (B) mailbox in a telecommunication network,
wherein, if a requested call connection between a calling party (A) and a called party (B) cannot be established, it is checked whether a status indicator indicates that a call from this calling party (A) is not to be connected to a mailbox of a called party (B),
wherein only if a status indicator does not indicate that a call from this calling party (A) is not to be connected to a mailbox of a called party (B), the calling party (A) is connected to a mailbox of the called party (B),
whereas else the calling party (A) is not connected to a mailbox of the called party (B).

**2.** Method according to claim 1, **characterized in that** the status indicator, indicating for a party (A) that a call from this party (A) is not to be connected to a mailbox of a or any called party (B), is set according to a message received from the party (A).

**3.** Method according to claim 2, **characterized in that** the message is a USSD message of a party (A) received by a component of a cellular mobile telecommunication network indicating either
- that a call from this party (A) is to be connected to a mailbox of a or of any called party (B)
- or that a call from this party (A) is not to be connected to a mailbox of a or of any called party (B).

**4.** Method according to any of the preceding claims, **characterized in that** before setup of a call connection to a called party (B) it is checked whether a call connection to the called party (B) can be established.

**5.** Method according to any of the preceding claims, **characterized in that** if no call connection to the called party (B) can be established it is checked whether calls to this called party (B) are to be connected to a mailbox, especially according to a setting caused by the called party (B).

**6.** Method according to any of the preceding claims, **characterized in that** the telecommunication network is a cellular mobile telecommunication network.

**7.** Method according to any of the preceding claims, **characterized in that** the calling party (A) and the called party (B) are in the same telecommunication network

**8.** Method according to any of the preceding claims 1-6, **characterized in that** the calling party (A) and the called party (B) are in different telecommunication networks.

**9.** Method according to any of the preceding claims, **characterized in that** the calling party and/ or the called party (B) is roaming in different telecommunication network than its home telecommunication network.

**10.** Switching system for a cellular mobile telecommunication network for handling a connection to a called party's (B) mailbox in a telecommunication network,
wherein the switching system is designed for checking, if a calling part's (A) request for a connection to the called party (B) is detected and a connection to the called party (B) cannot be established,
whether a status indicator indicates that a call from this calling party (A) is not to be connected to a mailbox of a called party (B),
and for connecting the calling party (A), only if no status indicator indicates that a call from this calling party (A) is not to be connected to a mailbox of a called party (B),
to a mailbox of the called party (B).
